# EUROPÄISCHE PATENTANMELDUNG

(11) **EP 1 359 506 A2**
(43) Veröffentlichungstag der Anmeldung: **05.11.2003**
(21) Anmeldenummer: 02024710.2
(22) Anmeldetag: 06.11.2002
(51) Int. Cl.: G06F 11/14

(54) **Bestimmung von Kennzahlen bezüglich der Dauer von Datenbankwiederherstellungsprozessen**

(30) Priorität: 24.04.2002 DE 10218460
(71) Anmelder: Software Engineering GmbH, 40470 Düsseldorf (DE)
(72) Erfinder: Klosterhalfen, Jörg, 50823 Köln (DE); Smets, Heinz-Dieter, 41372 Niederkrüchten (DE)
(74) Vertreter: Cohausz & Florack

(57) **Zusammenfassung**

Die Erfindung betrifft ein Verfahren zur Bestimmung von einen Datenbankwiederherstellungsprozess zeitlich beschreibenden Kennzahlen, bei dem die Datenbank aus zumindest einer Vielzahl von Objekten und einer Vielzahl von Aufzeichnungsdateien gebildet wird, bei dem die Objekte in Objektsicherungen gesichert werden, bei dem die Datenbank in Systemsicherungen gesichert wird, bei dem Veränderungen an den Objekten in Aufzeichnungsdateien aufgezeichnet werden und bei dem zur Wiederherstellung der Datenbank in einen Zustand zu einem bestimmbaren Ziel-Zeitpunkt die Objekte zumindest teilweise aus den Aufzeichnungsdateien, ausgehend von den Objekt-Sicherungen oder den Systemsicherungen, rekonstruiert werden. Eine Vorhersage der Dauer eines Wiederherstellungsprozesses lässt sich dadurch durchführen, dass für eine Wiederherstellung der Datenbank aus der Systemsicherung die Größe der zurückzuholenden Systemsicherung bestimmt wird, dass für eine Wiederherstellung der Datenbank aus den Objekt-Sicherungen die Größe der zurückzuholenden Objekt-Sicherungen bestimmt wird und dass vor einer Datenbankwiederherstellung aus den bestimmten Größen die Kennzahlen berechnet und angezeigt werden.

Für die Veröffentlichung ist die einzige Fig. bestimmt.

## Beschreibung

Die Erfindung betrifft ein Verfahren zur Bestimmung von einen Datenbankwiederherstellungsprozess zeitlich beschreibenden Kennzahlen, bei dem die Datenbank aus zumindest einer Vielzahl von Objekten und einer Vielzahl von Aufzeichnungsdateien gebildet wird, bei dem die Objekte in Objekt-Sicherungen gesichert werden, bei dem die Datenbank in Systemsicherungen gesichert wird, bei dem Veränderungen an den Objekten in Aufzeichnungsdateien aufgezeichnet werden und bei dem zur Wiederherstellung der Datenbank in einen Zustand zu einem bestimmbaren Ziel-Zeitpunkt die Objekte zumindest teilweise aus den Aufzeichnungsdateien, ausgehend von den Objekt-Sicherungen oder den Systemsicherungen, rekonstruiert werden.

Die Sicherung und Wiederherstellung von Datenbanken ist immens wichtig, da beim Betrieb von Datenbanken Fehler auftreten, die eventuell im laufenden System nicht mehr oder nur mit erheblichem Aufwand behoben werden können. Beim Betrieb einer Unternehmenssoftware, beispielsweise von SAP R/3 auf einem IBM Betriebssystem OS/390 mit einer relationalen Datenbank DB2, werden im laufenden Betrieb derzeit etwa 33.000 Objekte erstellt und bearbeitet, von denen derzeit etwa 9.000 Datenobjekte (Tablespaces) verwendet werden. Weitere Objekte können Indizes sein, die Datenschlüssel und Zeiger speichern. Alle von der Datenbank verwalteten Daten und Tabellen können als Objekte bezeichnet werden.

Eine Verfälschung von Objekten kann durch Programmfehler, Schnittstellenfehler und Anwenderfehler erfolgen. Die verfälschten Objekte verursachen Folgefehler an weiteren Objekten in der Datenbank, die nur schwer zu rekonstruieren sind. Es entsteht eine Vielzahl von verfälschten Objekten, deren Wiederherstellung, ausgehend vom Ist-Zustand, nur noch unter erheblichem Aufwand und mit großem Fehlerrisiko möglich ist.

Bei Fehlern ändern sich die magnetischen und/oder elektrischen Strukturen auf den Speichermedien und in den Speichern. Diese veränderten Strukturen müssen wieder in ihren ursprünglichen Zustand gebracht werden. Die hierzu notwendigen Maßnahmen müssen ermittelt und geeignete Mechanismen eingesetzt werden, den physikalisch korrekten Zustand wiederherzustellen.

Da Fehler nicht zu vermeiden sind, werden in regelmäßigen, bestimmbaren Abständen Sicherungen der Objekte, der Aufzeichnungsdateien oder auch der gesamten Datenbank durchgeführt.

Datenobjekte heißen Tablespaces, enthalten eine oder mehrere Tabellen, werden physisch in einem Linear Page Set gespeichert und liegen logisch (zusammen mit anderen Objekten) in einer Datenbank (Database). Ein Datenobjekt wird in der Datenbank DB2 von IBM über *Database.Tablespace* angesprochen. Intern werden Datenobjekte mit einer Database ID (DBID) und einer Page Set ID (PSID) verwaltet.

Ein Index speichert lediglich die Datenschlüssel und Zeiger zu den Daten einer einzigen Tabelle. Er wird physisch in einem Linear Page Set gespeichert. Ein Index liegt stets in derselben Datenbank wie das zugehörige Datenobjekt und besitzt einen Indexspace Namen. Intern werden Indizes mit einer Database ID (DBID) und einem Index Page Set ID (PSID=ISOBID) verwaltet.

Die Datenbank DB2 besitzt darüber hinaus eine Vielzahl von Verzeichnistabellen (ca. 70). Einige relevante Verzeichnistabellen werden nachfolgend genannt. Die Tabelle SYSIBM.SYSTABLESPACE speichert für ein Datenobjekt *Database.Tablespace* das zugehörige Paar (DBID,PSID) und kann mittels SQL gelesen werden.

Die Tabelle SYSIBM.SYSINDEXES speichert für einen Index *Database.Indexspace* das zugehörige Paar (DBID,PSID) und kann mittels SQL gelesen werden.

Die Tabelle SYSIBM.SYSLGRNX speichert unter (DBID,PSID) die relativen Adressen RBAs bzw. die Sequenznummern LRSNs von Objektänderungen. Dabei werden RBAs in Non-Data Sharing Umgebungen benutzt, LRSNs hingegen werden in Data Sharing Umgebungen benutzt. Die Tabelle SYSIBM.SYSLGRNX kann nur direkt auf physischer Ebene (VSAM CI Mode) gelesen werden.

Aufzeichnungsdateien (aktive LOGs) und Aufzeichnungsdatei-Sicherungen (Archiv-LOGs) mit anderen Informationen (etwa Konsistenzpunkte, Data Sharing Definitionen, etc.) werden in der Bootstrap Datei (BSDS) von DB2 verwaltet. Diese Datei kann mit DB2 Mitteln ausgedruckt, gelesen und ausgewertet werden.

Sicherungskopien können jeweils ein gesamtes Objekt (Full Image Copy) umfassen, jeweils nur die Änderungen an einem Objekt (Incremental Image Copy) beinhalten oder das gesamte System mit allen Objekten sichern (System Dump). Daneben werden zusätzlich Aufzeichnungsdateien (LOG-Files) geschrieben, in denen Veränderungen an den Objekten festgehalten werden. Darüber hinaus wird, beispielsweise in der Datenbank DB2, eine Verzeichnistabelle (z.B. SYSIBM.SYSLGRNX) geschrieben, die Informationen über die relative Byteadresse (RBA) bzw. die Sequenznummer (LOG Record Sequence Number LRSN) von Änderungen und die jeweils geänderten Objekte enthalten.

Die Aufzeichnungsdateien werden fortlaufend beschrieben und beim Erreichen einer vorbestimmten Größe auf einem Datenträger gesichert, wonach sie neu beschrieben werden können. Die gesicherten Aufzeichnungsdateien können auf verschiedenen Speichermedien abgelegt werden, wobei die Speichermedien beispielsweise abhängig vom Alter der Aufzeichnungsdatei-Sicherung gewählt werden. Eine junge Aufzeichnungsdatei-Sicherung wird auf einem schnellen Speichermedium, beispielsweise einem Direktzugriffsspeicher (Festplatte, DASD), abgelegt. Ältere Aufzeichnungsdatei-Sicherungen hingegen mögen auf günstigeren, aber langsameren Speichermedien, beispielsweise Speicherbändern (Tape), abgelegt werden.

Für die Datenbank ist es zunächst unerheblich, wo ein Objekt oder eine Aufzeichnungsdatei gespeichert ist. Der Zugriff auf ein Objekt oder eine Aufzeichnungsdatei erfolgt über einen Zugriffsbefehl an das Betriebsystem. Das Betriebssystem ist dafür verantwortlich, das geforderte Objekt zur Verfügung zu stellen. Ob ein Objekt auf dem ursprünglichen Speichermedium gespeichert ist oder auf ein anderes Speichermedium migriert worden ist, weiß lediglich das Betriebssystem. Das Betriebssystem lädt das Objekt und stellt es der Datenbank zur Verfügung, wobei die Dauer eines Ladevorgangs vom Speichermedium und von der Größe des Objekts abhängen kann.

Die Objekte oder auch die gesamte Datenstruktur werden mit Hilfe zweier verschiedener Sicherungsmethoden abgespeichert. Zum einen besteht die Möglichkeit eines Online-Backups (Sicherung auf Objektebene im laufenden Betrieb der Datenbank), wobei bei einem solchen Backup die einzelnen Objekte wie Daten, Indexe (Datenschlüssel mit Zeiger zu Daten für eine Zugriffsbeschleunigung bei Datenabfrage über Schlüssel) und Verzeichnisstrukturen gespeichert werden können. Während eines Online-Backups werden die Objekte unabhängig von konkurrierenden Schreib/Leseaktivitäten anderer Prozesse auf ein Speichermedium geschrieben. Dabei ist es möglich, Objekt-Sicherungen durchzuführen, wobei diese Objekt-Sicherungen entweder geänderte Objekte in ihrem kompletten Umfang abspeichern (Full Image Copy) oder eine inkrementelle Speicherung (Incremental Image Copy) vorgenommen wird. Bei dieser inkrementellen Speicherung werden lediglich die Änderungen an den Objekten seit der letzten Speicherung gespeichert. Die Erfindung ist nicht auf diese beiden Sicherungsmethoden beschränkt. Es ist ebenfalls denkbar, dass andere Sicherungsmethoden eingesetzt werden, aus denen eine Datenbank wiederhergestellt werden kann.

Beim sogenannten Offline-Backup (Sicherung auf Speicherplattenebene bei angehaltener oder gestoppter Datenbank) werden alle Schreibprozesse auf den Objekten unterbrochen oder beendet und danach wird eine komplette Sicherung des Systems durchgeführt. Eine solche, auch Full Dump genannte, Systemsicherung beinhaltet alle Objekte sowie alle Aufzeichnungsdateien und kann durch eine Hardware-Spiegelung des gesamten Systems auf eine zweite Speicherplattenlandschaft erfolgen. Das bedeutet, dass alle Daten zum selben Zeitpunkt auf einem zweiten Speicher gespeichert werden. Solche Full Dumps können in der Regel innerhalb kürzester Zeit durchgeführt werden.

Wird ein Fehler bemerkt, so muss zunächst bestimmt werden, zu welchem Zeitpunkt dieser Fehler aufgetreten ist, worauf hin ein Ziel-Zeitpunkt festgelegt werden kann, der möglichst nahe vor dem Zeitpunkt des Fehlers liegt. Dieser Ziel-Zeitpunkt wird in relationalen Datenbanken entweder durch eine relative Byteadresse (RBA) oder durch eine Sequenznummer (LOG Record Sequence Number LRSN) ausgedrückt. Nachdem der Ziel-Zeitpunkt bestimmt worden ist, müssen die Objekte wieder so hergestellt werden, wie sie zum Ziel-Zeitpunkt bestanden.

Hierzu kann der Datenbankadministrator (DBA) die vorhandenen Backups nutzen und die zeitlich auf das Backup folgenden, also ungesicherten Änderungen an den Objekten aus den Aufzeichnungsdateien und/oder Aufzeichnungsdatei-Sicherungen nachziehen.

Will der DBA eine Wiederherstellung der Objekte aus einem Online-Backup durchführen, so muss er die Objekte bestimmen, die wiederhergestellt werden müssen. Die Sicherungen können auf verschiedenen Speichermedien liegen, wodurch es für den Datenbankadministrator schwierig ist, abzuschätzen, wie lange eine solche Wiederherstellung und das Nachziehen von Änderungen an den Objekten dauert.

Auch beim Vorliegen eines Offline-Backups müssen die Änderungen aus den Aufzeichnungsdateien an den Objekten nachvollzogen werden und der Datenbankadministrator weiß nicht, wie viele Objekte tatsächlich verändert werden müssen. Außerdem weiß der Datenbankadministrator nicht, wie viele Aufzeichnungsdateien und/oder Aufzeichnungsdatei-Sicherungen zurückgeholt und gelesen werden müssen, um alle Objektänderungen nachvollziehen zu können.

Da ein Wiederherstellungsprozess jedoch zeitkritisch ist, ist es enorm wichtig, dass für die Wiederherstellung der Objekte der kürzest mögliche Weg beschritten wird. Für den Datenbankadministrator ist es im vorhinein jedoch nicht möglich zu bestimmen, wie viel Zeit ein Wiederherstellen einer Datenbank beim Vorgehen nach einer der beiden Möglichkeiten beansprucht. Nachteilig ist deshalb an den bekannten Verfahren, dass der Datenbankadministrator keine Hinweise darüber hat, wie viel Zeit eine Wiederherstellung der Datenbank benötigen könnte. Der Datenbankadministrator muss sich auf seine Erfahrung verlassen und aus dem Bauch heraus den zu beschreitenden Weg bestimmen. Dies ist jedoch regelmäßig fehlerträchtig, was zu unnötigen Ausfallzeiten der Datenbank führt.

Daher ergibt sich für die Erfindung das technische Problem, den Zeitbedarf einer Datenbankwiederherstellung im Voraus bestimmen zu können.

Das zuvor hergeleitete technische Problem wird erfindungsgemäß dadurch gelöst, dass für eine Wiederherstellung der Datenbank aus der Systemsicherung die Größe der zurückzuholenden Systemsicherung bestimmt wird, dass für eine Wiederherstellung der Datenbank aus den Objekt-Sicherungen die Größe der zurückzuholenden Objekt-Sicherungen bestimmt wird, und dass vor einer Datenbankwiederherstellung aus den bestimmten Anzahlen die Kennzahlen berechnet und angezeigt werden.

Es ist erkannt worden, dass für die Bestimmung der Zeit für eine Datenbankwiederherstellung zunächst die Größe der zu ladenden Sicherungen wichtig ist.

Der Datenbankadministrator hat mit der erfindungsgemäßen Anzeige der Kennzahlen einen Anhaltspunkt dafür, wie lange eine Wiederherstellung der Datenbank dauern könnte. Somit verringert sich die Fehlerwahrscheinlichkeit bei der Auswahl der gewählten Methode für die Datenbankwiederherstellung.

Es ist ebenfalls vorteilhaft und eigenständig auf einer Erfindung beruhend, wenn zusätzlich die Anzahl der zu rekonstruierenden Objekte bestimmt wird. Dazu wird vorgeschlagen, dass die Anzahl der zu rekonstruierenden Objekte, ausgehend von den Objekt-Sicherungen oder der Systemsicherung, im wesentlichen aus einer Verzeichnistabelle bestimmt wird und dass die bestimmten Werte zusätzlich für die Berechnung der Kennzahlen genutzt werden. Ebenfalls kann die Größe der zu rekonstruierenden Objekte im wesentlichen aus einer Verzeichnistabelle ermittelt werden. Hierbei kann beispielsweise über eine in einer Verzeichnistabelle gespeicherte Referenz auf ein Objekt über Betriebssystemmittel die dazugehörige Größe bestimmt werden. Darüber hinaus kann auch in der selben Weise ein Speichermedium oder zumindest eine Referenz auf ein Speichermedium aus der Verzeichnistabelle ermittelt werden.

Darüber hinaus wird vorgeschlagen, dass die Anzahl der zurückzuholenden Aufzeichnungsdateien für eine Wiederherstellung der Datenbank aus der Systemsicherung oder aus den Objekt-Sicherungen bestimmt wird und dass die Kennzahlen zusätzlich mit Hilfe dieser Werte bestimmt werden. Dies ist auch eigenständig auf einer Erfindung beruhend.

Ebenfalls kann die Anzahl der zu lesenden Aufzeichnungsdateien für die jeweilige Wiederherstellungsmethode bestimmt werden. Die Aufzeichnungsdateien können dabei sowohl aktive Aufzeichnungsdateien als auch Aufzeichnungsdatei-Sicherungen sein. Dies ist ebenfalls eigenständig auf einer Erfindung beruhend. Regelmäßig müssen die aktiven Aufzeichnungsdateien lediglich gelesen werden, da diese nicht migriert wurden, wohingegen die Aufzeichnungsdatei-Sicherungen durch das Betriebssystem zurückgeholt werden müssen.

Abhängig von der gewählten Methode für die Wiederherstellung müssen andere Aufzeichnungsdateien verwendet werden, um die Änderungen an den Objekten nachvollziehen zu können. Diese Änderungsschritte können in unterschiedlichen Aufzeichnungsdateien und deren Sicherungen gespeichert sein, so dass eine unterschiedliche Anzahl von Aufzeichnungsdateien und deren Sicherungen für die jeweiligen Wiederherstellungsmethoden zurück geholt und gelesen werden muss. Beim Zurückholen wird eine Aufzeichnungsdatei vom Betriebssystem der Datenbank bzw. dem Wiederherstellungsprozess zur Verfügung gestellt.

Das Zurückholen und Lesen der Aufzeichnungsdateien bzw. deren Sicherungen ist ebenfalls abhängig von deren Größe. Daher wird vorgeschlagen, dass für jede der Wiederherstellungsmethoden die Größen der zurückzuholenden und/oder zu lesenden aktiven Aufzeichnungsdateien und/oder Aufzeichnungsdatei-Sicherungen bestimmt werden, und dass diese Werte auch für die Bestimmung der Kennzahlen genutzt werden.

Es ist wichtig zu wissen, wie groß eine Aufzeichnungsdatei ist. Da für das Nachziehen der Objektänderungen eine Aufzeichnungsdatei durchlaufen werden muss, ist deren Größe von Interesse. Darüber hinaus muss die jeweilige Aufzeichnungsdatei gelesen werden, um die Änderungen bestimmen zu können. Das Einlesen (Scannen) einer großen Aufzeichnungsdatei dauert erheblich länger als das Scannen einer kleinen Aufzeichnungsdatei, weshalb eine Information über die Größe der Dateien ebenfalls vorteilhaft ist.

Häufig kommt es vor, dass Sicherungen auf verschiedenen Speichermedien abgelegt werden. Beispielsweise werden aktuelle Aufzeichnungsdatei-Sicherungen auf schnellen Speichermedien, beispielsweise Festplattenspeichern, abgelegt und ältere Aufzeichnungsdatei-Sicherungen auf langsamen Speichermedien, beispielsweise Bandspeichermedien, migriert. Die Migration wird vom Betriebssystem durchgeführt, welches das Zurückspielen der Dateien gewährleistet. Wenn die aktiven Aufzeichnungsdateien und/oder die Aufzeichnungsdatei-Sicherungen jeweils auf zumindest einem Speichermedium gespeichert werden, wird vorgeschlagen, dass die Speichermedien der zurückzuholenden und/oder zu lesenden aktiven Aufzeichnungsdateien und/oder Aufzeichnungsdatei-Sicherungen bestimmt werden und dass die Kennzahlen zusätzlich mit Hilfe dieser Werte bestimmt werden, was ebenfalls bereits eigenständig erfinderisch ist. Da das Zurückholen oder auch Lesen der Aufzeichnungsdateien sowie deren Sicherungen abhängig vom jeweiligen Speichermedium unterschiedlich lang dauert, ist auch die Kenntnis der Speichermedien vorteilhaft, wenn eine Kennzahl bestimmt werden soll, welche die Zeit für einen Datenbankwiederherstellungsprozess bestimmen soll. Häufig ist die aktive Aufzeichnungsdatei im Speicher abgelegt, so dass sie lediglich gelesen und nicht zunächst zurückgeholt werden muss.

Weiterhin ist vorteilhaft, wenn die Anzahl der zurückzuholenden und/oder zu lesenden aktiven Aufzeichnungsdateien und/oder Aufzeichnungsdatei-Sicherungen aus einer Verzeichnistabelle ermittelt werden. Auch die Größe kann aus einer Verzeichnistabelle ermittelt werden. Diese Ausgestaltung besitzt bereits eigenständigen erfinderischen Charakter, da das Auslesen einer Verzeichnistabelle in hohem Maße sicher ist und Fehler bei der Bestimmung der Kennzahlen vermieden werden können. Eine Verzeichnistabelle, beispielsweise in der DB2 Datenbank SYSIBM.SYSLGRNX, enthält Informationen über die relative Byteadresse (RBA) bzw. über die Sequenznummer (LOG Record Sequence Number LRSN) von Datenänderungen und kann nicht mittels SQL ausgelesen werden. Das direkte Auslesen dieser Verzeichnistabelle ermöglicht es, die Änderungen an den Objekten mit hoher Sicherheit bestimmen zu können, womit die Kennzahlen ein hohes Maß an Genauigkeit erreichen.

Beim Wiederherstellen der Daten aus einer Online-Sicherung müssen sowohl die Gesamtsicherungen (Full Image Copies) als auch die inkrementellen Sicherungen (Incremental Image Copies) gelesen und zurückgespielt werden, bevor die eventuell zeitlich folgenden, also ungesicherten Änderungen an den Objekten, aus den Aufzeichnungsdateien nachgezogen werden können.

Beim Wiederherstellen aus einer Systemsicherung muss die Systemsicherung wieder zurückgespielt werden, bevor die zeitlich folgenden, also ungesicherten Änderungen an den Objekten aus den Aufzeichnungsdateien, nachgezogen werden.

Daher unterscheiden sich die beiden Methoden auch darin, dass die Anzahl der zu rekonstruierenden Objekte variiert, was für die den Wiederherstellungsprozesses ebenfalls zeitliche Bedeutung hat.

Es ist jedoch eine Unterschied, ob die Daten aus einem Online-Backup oder aus einem Offline-Backup wiederhergestellt werden und die Änderungen an den Objekten nachgezogen werden müssen. Abhängig von der jeweiligen Backup-Methode sind unterschiedlich viele Sicherungen zurückzuholen und zu lesen sowie unterschiedlich viele Veränderungsschritte nachzuvollziehen.

Werden bei der Objektsicherung Gesamtsicherungen (Full Image Copy) im Wesentlichen aller geänderter Objekte durchgeführt, wird vorgeschlagen, dass die Anzahl und/oder Größe der für die Wiederherstellung zurückzuholen und/oder zu lesenden Gesamtsicherungen bestimmt wird und dass diese Werte zusätzlich für die Berechnung der Kennzahlen genutzt werden. Wird ausgehend von Online-Backups eine Wiederherstellung durchgeführt, müssen die Sicherungen der geänderten Objekte zunächst durch das Betriebssystem geladen und der Datenbank zur Verfügung gestellt werden. Danach muss das Objekt gelesen werden und die Änderung auf die wiederherzustellende Datenbank angewendet werden.

Full Image Copies werden sowohl auf schnellen Festplattenspeichern als auch auf langsamen Bandspeichern oder anderen Speichermedien abgelegt, wodurch sich die Zeit für die Wiederherstellung einer Datenbank auch mit Hilfe der Kenntnis über die Speicherorte der Objekt-Sicherungen genauer festlegen lässt. Daher wird vorgeschlagen, dass die Speichermedien der für die Wiederherstellung zurückzuholenden und/oder zu lesenden Gesamtsicherungen bestimmt werden.

Das gleiche gilt für inkrementelle Objekt-Sicherungen, wobei die inkrementellen Sicherungen (Incremental Image Copy) die Veränderungen an Objekte in bestimmbaren Intervallen speichern. Hierbei wird vorgeschlagen, dass die Anzahl und/oder Größe der für die Wiederherstellung zu ladenden und/oder zu lesenden inkrementellen Sicherungen bestimmt wird und dass die Kennzahlen zusätzlich mit Hilfe dieser Werte bestimmt werden. Um die Datenbank wiederherzustellen, müssen alle Veränderungen an einem Objekt nachgezogen werden. Dabei werden die inkrementellen Sicherungen zunächst durch das Betriebssystem zur Verfügung gestellt und anschließend gelesen. Die inkrementellen Sicherungen enthalten Informationen über die an den jeweiligen Objekten vorgenommenen Änderungen. Es ist vorteilhaft zu wissen, wie viele inkrementellen Sicherungen abgerufen und ausgelesen werden müssen, um die Änderungen an den Objekten nachvollziehen zu können.

Hierbei ist es ebenfalls vorteilhaft, wenn die Speichermedien der für die Wiederherstellung zurückzuholenden und/oder zu lesenden inkrementellen Sicherungen bestimmt werden und wenn die Kennzahlen zusätzlich mit Hilfe dieser Werte bestimmt werden. Die inkrementellen Sicherungen beinhalten die jeweiligen Änderungen an den Objekten seit ihrer letzten Sicherung. Auch die inkrementellen Sicherungen können auf verschiedenen Speichermedien abgelegt werden, wobei hierbei beispielsweise das Alter der inkrementellen Sicherung für das Betriebssystem für die Wahl des Speichermediums ausschlaggebend ist. Zunächst wird eine Sicherung auf einem schnellen Speichermedium abgelegt und mit der Zeit wird diese Sicherung auf ein langsames Speichermedium migriert, da die Wahrscheinlichkeit, dass eine solche Sicherung benötigt wird, mit dem Alter der Sicherung abnimmt. Das Nachziehen der inkrementellen Sicherungen hängt zeitlich auch von der Art des Speichermediums ab, weshalb auch dieser Wert für die Bestimmung der Kennzahlen interessant ist.

Häufig kommt es vor, dass die Indizes (Datenschlüssel mit Zeiger zu Daten für eine Zugriffsbeschleunigung bei Datenabfragen über Schlüssel) nicht mitgesichert werden, sondern diese nach der Wiederherstellung der Datenobjekte komplett wieder aufgebaut werden müssen. Dann ist es sinnvoll, wenn für eine Rekonstruktion der Indizes die Anzahl der zu lesenden, wiederhergestellten Datenobjekte bestimmt wird und die Kennzahlen mit Hilfe dieser Werte bestimmt werden. Beim Wiederaufbau eines Indexes für ein Datenobjekt wird das gesamte Datenobjekt gelesen und der Index anhand dieser Informationen neu erstellt. Da für die Wiederherstellung der Indizes die wiederhergestellten Datenobjekte im wesentlichen alle gelesen werden müssen, ist es wichtig zu wissen, wie viele Datenobjekte tatsächlich wiederhergestellt worden sind.

Ein weiterer Gegenstand der Erfindung ist die Verwendung des zuvor beschriebenen Verfahrens in einer relationalen Datenbank, beispielsweise DB2 von IBM auf einem OS/390 Betriebssystem. In diesem Zusammenhang ist eine Verwendung des erfindungsgemäßen Verfahrens bei einer Unternehmenssoftware, beispielsweise SAP R/3, besonders vorteilhaft.

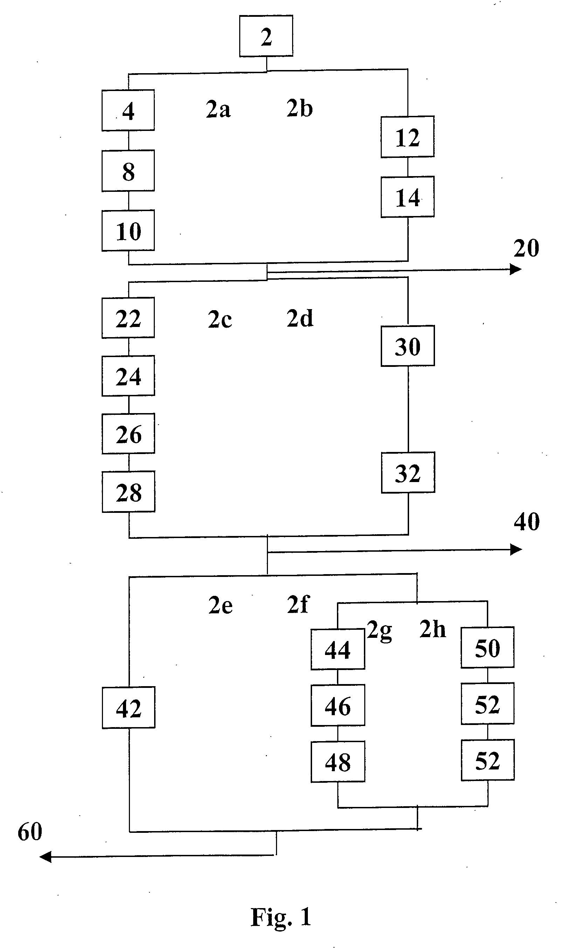

Die Erfindung wird im Nachfolgenden anhand einer ein Ausführungsbeispiel zeigenden Zeichnung näher erläutert. In der Zeichnung zeigt die einzige Figur ein Flussdiagramm eines erfindungsgemäßen Verfahrens.

In Schritt 2 wird ermittelt, ob sowohl ein Online-Backup als auch ein Offline-Backup vorliegt. Beim Offline-Backup ist die gesamte Datenbank auf einem weiteren Datenträger gespiegelt (Full Dump) und beim Online-Backup liegen Full Image Copy (FIC) Backups und Incremental Image Copy (IIC) Backups vor. Bestehen diese beiden Sicherungen, so können Kennzahlen bestimmt werden, welche die jeweiligen Zeitdauern einer Wiederherstellung der Datenbank, ausgehend von einer dieser Sicherungen, bestimmen.

Dazu wird im Zweig 2a eine Kennzahl bestimmt, welche die Dauer einer Wiederherstellung der Datenbank, ausgehend von Online-Backups, bestimmt. Dazu wird im Schritt 4 bestimmt, welche Größe die durch das Betriebsystem zu ladenden Objekt-Sicherungen aufweisen. Im Schritt 8 wird bestimmt, wie viele FICs und IICs durch das Betriebssystem zu laden sind und auf welchen Speichermedien die FICs und IICs abgelegt sind. Im Schritt 10 wird zusätzlich bestimmt, wie viele Archiv-LOGs (Aufzeichnungsdatei-Sicherungen) durch das Betriebssystem geladen werden müssen, sowie deren Größe und Speicherorte. Die mit Hilfe der Schritte 4, 8 und 10 bestimmten Werte erlauben eine Ermittlung einer Kennzahl, welche die Dauer einer Vorbereitung, ausgehend von einem Online-Backup, bestimmt.

Im Zweig 2b wird ermittelt, wie lange eine Vorbereitung einer Wiederherstellung, ausgehend von einem Offline-Backup, dauert. Für die Vorbereitung ist es notwendig, dass die Gesamtsicherung zurückgespielt wird und die Archiv-LOG Dateien durch das Betriebssystem geladen werden. Dazu wird im Schritt 12 bestimmt, wie groß eine Systemsicherung ist und auf welchem Speichermedium diese abgelegt ist. Im Schritt 14 wird bestimmt, wie viele Archiv-LOGs durch das Betriebsystem geladen werden müssen, um die Änderung an den Datenobjekten nachziehen zu können und welche Größe diese haben. Mit Hilfe dieser Werte wird eine Kennzahl bestimmt, welche die Dauer der Vorbereitung bei einer Wiederherstellung, ausgehend von einer Systemsicherung, festlegt.

Die in den Zweigen 2a und 2b bestimmten Kennzahlen werden ausgegeben 20.

Im Anschluss daran werden im Zweig 2c zusätzliche Kennzahlen bestimmt, welche die Dauer des Wiederherstellens der Datenobjekte, ausgehend von einem Online-Backup, bestimmen. Im Schritt 22 wird bestimmt, wie viele FICs gelesen werden müssen, wie groß diese FICs sind und auf welchen Speichermedien diese abgelegt sind. Im Schritt 24 wird für zu lesenden IICs bestimmt, wo diese abgespeichert sind, wie groß diese sind und wie viele es sind. Im Schritt 26 wird bestimmt, wie viele Änderungsschritte aus den Archiv-LOG Dateien auf die geladenen Datenobjekte angewandt werden müssen und wie groß die jeweiligen Archiv-LOG Dateien sind. Schließlich wird im Schritt 28 ermittelt, wie viele Änderungen aus aktiven LOG-Dateien (aktive Aufzeichnungsdateien) an den Datenobjekten vorgenommen werden müssen, wie groß die aktiven LOG-Dateien sind und auf welchem Speichermedium sie abgelegt worden sind. Anhand der Schritte 22, 24, 26 und 28 lässt sich eine weiter Kennzahl zur zeitlichen Bestimmung eines Wiederherstellungsprozesses, ausgehend von einem Online-Backup, festgelegen.

Im Zweig 2d wird eine weitere Kennzahl bestimmt, die, ausgehend von einem Full Dump, einen Wiederherstellungsprozess zeitlich bestimmt. Im Schritt 30 wird ermittelt, wie viele Veränderungen an Datenobjekten, ausgehend von einer Systemsicherung, aus Archiv-LOGs durchgeführt werden müssen. Diese Archiv-LOGs werden in ihrer Größe und ihrem Speichermedium bestimmt. Außerdem wird bestimmt, wie viele Änderungen an den Datenobjekten aus aktiven LOG-Dateien nachgezogen werden müssen, wie groß die aktiven LOG-Dateien sind und auf welchem Speichermedium sie abgelegt worden sind 32. Die in den Schritten 30 und 32 bestimmten Werte erlauben die Ermittlung einer weiteren Kennzahl zur Beschreibung eines Wiederherstellungsprozesses. Die in den Zweigen 2c und 2d ermittelten Kennzahlen werden ebenfalls ausgegeben 40.

Schließlich lassen sich Indizes ebenfalls wiederherstellen.

Im Zweig 2e wird bestimmt, wie lange ein Wiederaufbauen von Indizes dauert, wobei das Wiederaufbauen eines einzelnen Indexes durch Lesen des zugehörigen Datenobjektes realisiert wird. Im Zweig 2e wird im Schritt 42 ermittelt, wie viele Datenobjekte gelesen werden müssen, um die jeweiligen Indizes rekonstruieren zu können.

Es ist ebenfalls möglich, die Indizes abzuspeichern und aus den gespeicherten Indizes die einzelnen Indizes wiederherzustellen. Dazu wird im Zweig 2f eine Kennzahl bestimmt.

Im Zweig 2g wird für ein Online-Backup im Schritt 44 bestimmt, wie viele Sicherungen der Indizes gelesen werden müssen, im Schritt 46 wird bestimmt, wie viele Änderungen an den gespeicherten Indizes aus Archiv-LOGs nachgezogen werden müssen und im Schritt 48 wird bestimmt, wie viele Änderungen aus einer aktiven LOG-Dateien nachvollzogen werden müssen, um die Indizes wiederherzustellen.

Im Zweig 2h wird für eine Systemsicherung festgestellt, wie lange eine Indexwiederherstellung dauern wird. Hierzu wird im Schritt 50 festgestellt, wie viele Indexsicherungen gelesen werden müssen, im Schritt 52 wird festgestellt, wie viele Änderungen an den gelesenen und geschriebenen Indizes aus Archiv-LOGs nachgezogen werden müssen und im Schritt 50 wird bestimmt, wie viele Änderungen aus aktiven LOG-Dateien nachgezogen werden müssen, um die Indizes wiederherzustellen. Die so bestimmte Kennzahl kann wiederum ausgegeben werden (nicht dargestellt).

Die bestimmten Kennzahlen für die Vorbereitung, die Wiederherstellung und den Indexaufbau werden kumuliert und ausgegeben 60.

Der Datenbankadministrator erhält anhand der Ausgaben der Kennzahlen 20,40 und 60 ein Mittel, mit dem er im voraus abschätzen kann, wie lange eine Wiederherstellung einer Datenbank dauern könnte. Mit Hilfe dieser Kennzahlen wird ihm der Entscheidungsprozess zur Wahl des geeigneten Wiederherstellungsweges erleichtert.

## Patentansprüche

1. Verfahren zur Bestimmung von einen Datenbankwiederherstellungsprozess zeitlich beschreibenden Kennzahlen,
- bei dem die Datenbank aus zumindest einer Vielzahl von Objekten und einer Vielzahl von Aufzeichnungsdateien gebildet wird,
- bei dem die Objekte in Objekt-Sicherungen gesichert werden,
- bei dem die Datenbank in Systemsicherungen gesichert wird,
- bei dem Veränderungen an den Objekten in Aufzeichnungsdateien aufgezeichnet werden, und
- bei dem zur Wiederherstellung der Datenbank in einen Zustand zu einem bestimmbaren Ziel-Zeitpunkt die Objekte zumindest teilweise aus den Aufzeichnungsdateien ausgehend von den Objekt-Sicherungen oder den Systemsicherungen rekonstruiert werden,
**dadurch gekennzeichnet,**
- **dass** für eine Wiederherstellung der Datenbank aus der Systemsicherung die Größe der zurückzuholenden Systemsicherung bestimmt wird,
- **dass** für eine Wiederherstellung der Datenbank aus den Objekt-Sicherungen die Größe der zurückzuholenden Objekt-Sicherungen bestimmt wird, und
- **dass** vor einer Datenbankwiederherstellung aus den bestimmten Größen die Kennzahlen berechnet und angezeigt werden.

2. Verfahren nach Anspruch 1, **dadurch gekennzeichnet, dass** die Anzahl, Größe und/oder Speichermedien der zu rekonstruierenden Objekte, ausgehend von den Objekt-Sicherungen oder der Systemsicherung, im wesentlichen aus einer Verzeichnistabelle bestimmt wird, und dass die bestimmten Werte zusätzlich für die Berechnung der Kennzahlen genutzt wird.

3. Verfahren nach Anspruch 1 oder 2, **dadurch gekennzeichnet, dass** die Anzahl der zurückzuholenden und/oder zu lesenden Aufzeichnungsdateien für eine Wiederherstellung der Datenbank aus der Systemsicherung oder aus den Objekt-Sicherungen bestimmt wird und dass die Kennzahlen zusätzlich mit Hilfe dieser Werte bestimmt werden.

4. Verfahren nach einem der Ansprüche 1 bis 3, **dadurch gekennzeichnet, dass** die Größen der zurückzuholenden und/oder zu lesenden aktiven Aufzeichnungsdateien und/oder Aufzeichnungsdatei-Sicherungen für eine Wiederherstellung der Datenbank aus der Systemsicherung oder aus den Objekt-Sicherungen bestimmt werden, und dass die Kennzahlen zusätzlich mit Hilfe dieser Werte bestimmt werden.

5. Verfahren nach einem der Ansprüche 1 bis 4, **dadurch gekennzeichnet, dass** die aktiven Aufzeichnungsdateien und/oder die Aufzeichnungsdatei-Sicherungen jeweils auf zumindest einem Speichermedium gespeichert werden, dass die Speichermedien der zurückzuholenden und/oder zu lesenden aktiven Aufzeichnungsdateien und/oder Aufzeichnungsdatei-Sicherungen bestimmt werden, und dass die Kennzahlen zusätzlich mit Hilfe dieser Werte bestimmt werden.

6. Verfahren nach einem der Ansprüche 1 bis 5, **dadurch gekennzeichnet, dass** die Anzahl und/oder Größe und/oder Speichermedien der zurückzuholenden und/oder zu lesenden aktiven Aufzeichnungsdateien und/oder Aufzeichnungsdatei-Sicherungen aus einer Verzeichnistabelle ermittelt wird, und dass diese Werte zusätzlich für die Berechnung der Kennzahlen genutzt werden.

7. Verfahren nach einem der Ansprüche 1 bis 6, **dadurch gekennzeichnet, dass** bei der Objekt-Sicherung Gesamtsicherungen im wesentlichen aller geänderter Objekte durchgeführt werden, dass die Anzahl und/oder Größe der für die Wiederherstellung zurückzuholenden und/oder zu lesenden Gesamtsicherungen bestimmt wird, und dass diese Werte zusätzlich für die Berechnung der Kennzahlen genutzt werden.

8. Verfahren nach einem der Ansprüche 1 bis 7, **dadurch gekennzeichnet dass** die Gesamtsicherungen auf zumindest einem Speichermedium abgelegt werden, dass die Speichermedien der für die Wiederherstellung zurückzuholenden und/oder zu lesenden Gesamtsicherungen bestimmt werden, und dass die Kennzahlen zusätzlich mit Hilfe dieser Werte bestimmt werden.

9. Verfahren nach einem der Ansprüche 1 bis 8, **dadurch gekennzeichnet, dass** bei der Objekt-Sicherung inkrementelle Sicherungen der Veränderungen von Objekte durchgeführt werden, dass die Anzahl und/oder Größe der für die Wiederherstellung zurückzuholenden und/oder zu lesenden inkrementellen Sicherungen bestimmt wird, und dass die Kennzahlen zusätzlich mit Hilfe dieser Werte bestimmt werden.

10. Verfahren nach einem der Ansprüche 1 bis 9, **dadurch gekennzeichnet dass** die inkrementellen Sicherungen auf zumindest einem Speichermedium abgelegt werden, dass die Speichermedien der für die Wiederherstellung zurückzuholenden und/oder zu lesenden inkrementellen Sicherungen bestimmt werden, und dass die Kennzahlen zusätzlich mit Hilfe dieser Werte bestimmt werden.

11. Verfahren nach einem der Ansprüche 1 bis 10, **dadurch gekennzeichnet, dass** für einen Wiederaufbau der Pfade zur Zugriffsbeschleunigung die Anzahl der zu lesenden, wiederhergestellten Objekte bestimmt wird, und dass die Kennzahlen zusätzlich mit Hilfe dieser Werte bestimmt werden.

12. Verwendung eines Verfahrens nach einem der Ansprüche 1 bis 11 in einer relationalen Datenbank.
